# EUROPEAN PATENT APPLICATION

(11) **EP 2 128 783 A1**
(43) Date of publication of application: **02.12.2009**
(21) Application number: 07738995.5
(22) Date of filing: 19.03.2007
(51) Int. Cl.: G06F 21/20

(54) **SERVICE CONTROL SYSTEM, SERVICE CONTROL METHOD, AND SERVICE CONTROL PROGRAM**

(71) Applicant: Fujitsu Limited, Kawasaki-shi, Kanagawa 211-8588 (JP)
(72) Inventor: SUZUKI, Masato, Kawasaki-shi Kanagawa 211-8588 (JP); KOTANI, Seigo, Kawasaki-shi Kanagawa 211-8588 (JP); TANAKA, Keishiro, Kawasaki-shi Kanagawa 211-8588 (JP)
(74) Representative: Fenlon, Christine Lesley
(86) International application number: PCT/JP2007/055552
(87) International publication number: WO 2008/114390

(57) **Abstract**

In a safety determining system, an information processing apparatus (100) performs authentication of biometrical information and gathers corresponding environment information (apparatus information, software, peripheral devices, location information). Then, the information processing apparatus (100) sends the gathered environment information and service information of a target service to a central server (200). Based on the environment information, the service information, and information stored in an environment information DB, the central server (200) determines whether it is safe to provide a service to the information processing apparatus (100). Based on that determination result, a service terminal (400) provides a service to the information processing apparatus (100).

## Description

### TECHNICAL FIELD

The present invention relates to a service control system that includes an authentication terminal to authenticate a user terminal used by a service user and a service terminal to provide a service to the user terminal and relates to a service control apparatus and a service control program.

### BACKGROUND ART

In recent years, to guard against the problem of leakage of information (classified information or information on user privacy) stored in an information processing apparatus, the information processing apparatus is equipped with a biometrical authentication functionality that uses biometrical information such as information on fingerprint, iris, face, and vein of the user to protect the stored information.

The biometrical information used in biometrical authentication is the ultimate level of information available for user validation and the uniqueness thereof requires a secure storing method or utilization method. To ensure the safety of the biometrical information, a common practice is not to use the biometrical information as it is at the time of authentication but to use the data of certain features abstracted from the biometrical information or the data obtained by encrypting the biometrical information for safety.

Patent Document 1 discloses a program to execute an authentication processing for user validation and an information processing apparatus that can perform data update in a flexible and solemn manner.

Patent Document 1: International Pamphlet No. WO2005/106620

### DISCLOSURE OF INVENTION

### PROBLEM TO BE SOLVED BY THE INVENTION

However, in the abovementioned conventional technology, if the biometrical information leaks due to some to some reason, it is likely that an ill-intentioned third person misuses the biometrical information to perform unauthorized business transactions through the Internet.

The problem is serious because, if the biometrical information is misused by an ill-intentioned third person (if there is impersonation of the authorized user), there is a risk of theft of the information on user privacy, alternation in private information, or business transactions with impersonation of the authorized user.

The present invention has been made to solve the above problems in the conventional technology and it is an object of the present invention to provide a service control system, a service control method, and a service control program by which, even if there is a leakage of biometrical information, it is possible to prevent any fraudulent act that may be attempted by using the leaked biometrical information.

### MEANS FOR SOLVING PROBLEM

To solve the above problems and achieve the object, the present invention is a service control system that includes an authentication terminal that performs authentication of a user terminal used by a service user; and a service terminal that provides a service to the user terminal. The user terminal includes a chip that independently executes a predetermined processing operation. The chip includes a private key storing unit that stores therein biometrical information of the service user and a private key that is a key unique to the chip; an environment information obtaining unit that, when the biometrical information is processed, obtains information on a location of the user terminal as environment information at a time when the biometrical information is processed; and an encrypting unit that encrypts service information of a service requested by the service user and the environment information with the private key to obtain encrypted information and sends the encrypted information to the authentication apparatus. The authentication terminal includes a decrypting unit that decrypts the encrypted information with a public key that forms a counterpart to the private key to generate decrypted information; and an authentication processing unit that, based on the decrypted information, performs authentication of the user terminal and outputs an authentication result to the service terminal. The service terminal includes a service providing unit that, based on the authentication result output by the authentication processing unit, performs service provision with respect to the user terminal.

In the invention, the authentication terminal includes a domain information storing unit that stores therein permissible domain information that is information, maintained in a corresponding manner, on a service provided to the user terminal by the service terminal and a domain of the user terminal in which provision of the service is permissible, and the authentication processing unit performs authentication of the user terminal based on the service information and the environment information which are included in the decrypted information and the permissible domain information.

In the invention, the environment information obtaining unit obtains information on a peripheral device connected to the user terminal and information on software installed in the user terminal as environment information, and the domain information storing unit stores therein permissible domain information that is information, maintained in a corresponding manner, on a service provided to the user terminal and a peripheral device and software for which provision of the service is permissible.

The present invention is a service control method for a service control system that includes an authentication terminal that performs authentication of a user terminal used by a service user; and a service terminal that provides a service to the user terminal, the user terminal including a chip that independently executes a predetermined processing operation. The service control method includes, in the chip, a private key storing step of storing, in a storing unit, biometrical information of the service user and a private key that is a key unique to the chip; an environment information obtaining step of, when the biometrical information is processed, obtaining information on a location of the user terminal as environment information at a time when the biometrical information is processed; an encrypting step of encrypting service information of a service requested by the service user and the environment information with the private key to obtain encrypted information and sending the encrypted information to the authentication apparatus; in the authentication terminal, a decrypting step of decrypting the encrypted information with a public key that forms a counterpart to the private key to generate decrypted information; an authentication processing step of, based on the decrypted information, performing authentication of the user terminal and outputs an authentication result to the service terminal; and in the service terminal, a service providing step of, based on the authentication result output by the authentication processing unit, performing service provision with respect to the user terminal.

The invention further includes, in the authentication terminal, a domain information storing step of storing, in a storing unit, permissible domain information that is information, maintained in a corresponding manner, on a service provided to the user terminal by the service terminal and a domain of the user terminal in which provision of the service is permissible, wherein the authentication processing step includes performing authentication of the user terminal based on the service information and the environment information which are included in the decrypted information and the permissible domain information.

In the invention, the environment information obtaining step includes obtaining information on a peripheral device connected to the user terminal and information on software installed in the user terminal as environment information, and the domain information storing step includes storing, in the storing unit, permissible domain information that is information, maintained in a corresponding manner, on a service provided to the user terminal and a peripheral device and software for which provision of the service is permissible.

The present invention is a service control program for a service control system that includes an authentication terminal that performs authentication of a user terminal used by a service user; and a service terminal that provides a service to the user terminal, the user terminal including a chip that independently executes a predetermined processing operation. The service control program causes a computer to perform: in the chip, a private key storing step of storing, in a storing unit, biometrical information of the service user and a private key that is a key unique to the chip; an environment information obtaining step of, when the biometrical information is processed, obtaining information on a location of the user terminal as environment information at a time when the biometrical information is processed; an encrypting step of encrypting service information of a service requested by the service user and the environment information with the private key to obtain encrypted information and sending the encrypted information to the authentication apparatus; in the authentication terminal, a decrypting step of decrypting the encrypted information with a public key that forms a counterpart to the private key to generate decrypted information; an authentication processing step of, based on the decrypted information, performing authentication of the user terminal and outputs an authentication result to the service terminal; and in the service terminal, a service providing step of, based on the authentication result output by the authentication processing unit, performing service provision with respect to the user terminal.

The invention further causes the computer to perform, in the authentication terminal, a domain information storing step of storing, in a storing unit, permissible domain information that is information, maintained in a corresponding manner, on a service provided to the user terminal by the service terminal and a domain of the user terminal in which provision of the service is permissible, wherein the authentication processing step includes performing authentication of the user terminal based on the service information and the environment information which are included in the decrypted information and the permissible domain information.

The environment information obtaining step includes obtaining information on a peripheral device connected to the user terminal and information on software installed in the user terminal as environment information, and the domain information storing step includes storing, in the storing unit, permissible domain information that is information, maintained in a corresponding manner, on a service provided to the user terminal and a peripheral device and software for which provision of the service is permissible.

### EFFECT OF THE INVENTION

According to the present invention, a user terminal includes a chip that independently executes a predetermined processing operation. The chip stores therein biometrical information of the user and a private key that is a key unique to the chip. When the biometrical information is processed, the chip obtains information on the location of the user terminal as environment information at the time when the biometrical information is processed. Then, the chip encrypts service information of a service requested by the user and the environment information with the private key to generate encrypted information and sends the encrypted information to the authentication apparatus. The authentication terminal decrypts the encrypted information with a public key, which forms a counterpart to the private key, to generate decrypted information and, based on the decrypted information, performs authentication of the user terminal and outputs an authentication result to a service terminal. Based on the authentication result output by the authentication processing unit, the service terminal performs service provision with respect to the user terminal. Thus, even if there is a leakage of the biometrical information, it is possible to prevent unauthorized use of an information processing apparatus.

Moreover, according to the present invention, the authentication terminal stores therein permissible domain information that is information, maintained in a corresponding manner, on a service provided to the user terminal by the service terminal and a domain of the user terminal in which provision of the service is permissible. Based on the service information and the environment information included in the decrypted information and the permissible domain information, the authentication terminal performs authentication of the user terminal. As a result, for each service, it is possible to restrict a geographical region in which the service can be provided.

Furthermore, according to the present invention, information on a peripheral device connected to the user terminal and information on software installed in the user terminal is obtained as environment information and information, maintained in a corresponding manner, on a service provided to the user terminal and a peripheral device and software for which provision of the service is permissible is stored as permissible domain information. As a result, service provision is performed upon ensuring the safety.

### BRIEF DESCRIPTION OF DRAWINGS

FIG. 1 is a diagram of a configuration of a safety determining system according to an embodiment of the present invention.
FIG. 2 is a functional block diagram illustrating a configuration of an information processing apparatus.
FIG. 3 is a functional block diagram of a central server according to the present embodiment.
FIG. 4 is a diagram of an exemplary data structure of environment information DB.
FIG. 5 is a flowchart illustrating a sequence of operations in service provision performed between the information processing apparatus and a service terminal.
FIG. 6 is a diagram of a web page image.
FIG. 7 is a flowchart (1) illustrating a sequence of operations in safety determining processing.
FIG. 8 is a flowchart (2) illustrating a sequence of operations in safety determining processing.
FIG. 9 is a flowchart (3) illustrating a sequence of operations in safety determining processing.
FIG. 10 is a flowchart (4) illustrating a sequence of operations in safety determining processing.

### EXPLANATIONS OF LETTERS OR NUMERALS

- 2]: 10,201 CPU
- 11,: 142, 202 RAM
- 12,: 203 Input unit
- 13: Power supply unit
- 14: AD/DA
- 15: Microphone/speaker
- 16: ROM
- 17,: 204 Display unit
- 18: External connection terminal
- 19: Antenna unit
- 100: Information processing apparatus
- 110: Engine unit
- 120: Biometrical information obtaining unit
- 130: Location information obtaining unit
- 140: Security chip
- 141a, 205a: Control program
- 141b: Biometrical information file
- 141c: Electronic certificate file
- 141d: Environment information file
- 141e: Private key file
- 143: MPU
- 200: Central server
- 205: Memory unit
- 206: Communication unit
- 300: Authentication authority server

### BEST MODE(S) FOR CARRYING OUT THE INVENTION

An exemplary embodiment for a service control system, a service control method, and a service control program according to the present invention will be described below in detail with reference to the accompanying drawings. The present invention is not limited to the embodiment described below.

### Embodiment

First, description is given about an outline and features of a safety determining system according to the present embodiment. In the safety determining system according to the present embodiment, an information processing apparatus performs authentication of biometrical information and gathers environment information (including apparatus information of the information processing apparatus, information on software programs installed in the information processing apparatus, peripheral devices connected to the information processing apparatus, and location information of the information processing apparatus). Then, the information processing apparatus sends the gathered environment information and service information of a target service to a central server. Based on the environment information, the service information, and an environment information DB (a DB used to store permissible environment conditions for service provision), the central server determines whether it is safe to provide a service to the information processing apparatus. Based on that determination result, a service terminal provides a service to the information processing apparatus.

In this way, the information processing apparatus performs biometrical authentication and the central server determines whether it is safe to provide a service to the information processing apparatus. Thus, even if the biometrical information leaks due to some reason, it is possible to prevent unauthorized use of the information processing apparatus.

Meanwhile, the information processing apparatus in the present embodiment is assumed to be a mobile telephone. Moreover, it is assumed that the safety determining system according to the present invention is implemented in the case of business transactions using the mobile telephone. However, instead of a mobile telephone, the information processing apparatus can also be a personal computer, a copier, a printer, a FAX machine, a refrigerator, a TV, a DVD player, a PDA (Personal Digital Assistant), an air conditioner, a microwave oven, or a robot. Given below is the description about a configuration of the safety determining system according to the present embodiment.

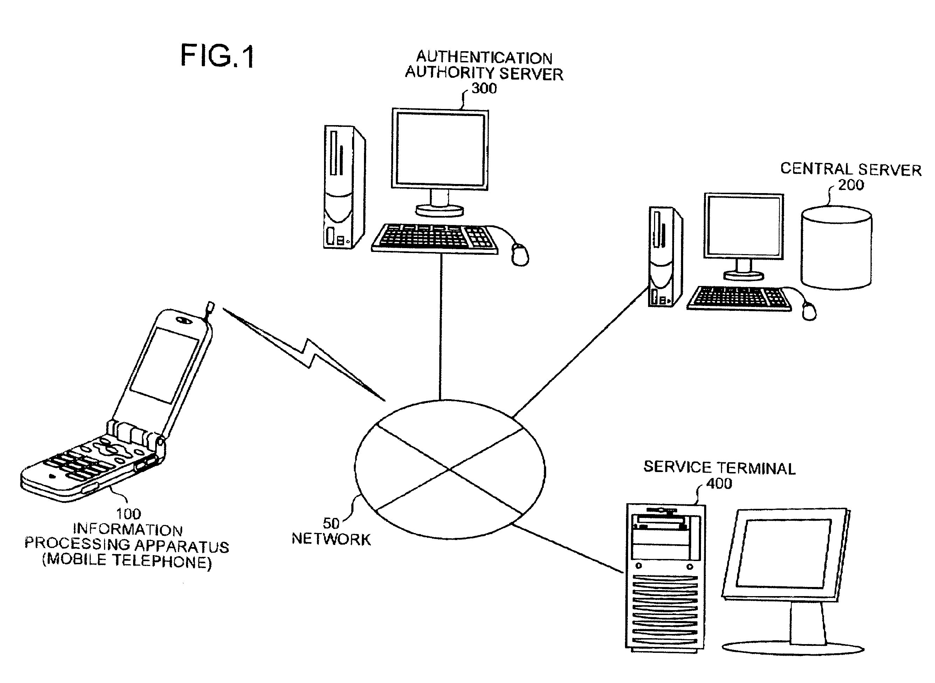

FIG. 1 is a diagram of a configuration of the safety determining system according to the present embodiment. The safety determining system includes an information processing apparatus (mobile telephone) 100, a central server 200, an authentication authority server 300, and a service terminal 400. Each of the central server 200, the authentication authority server 300, and the service terminal 400 is connected to a network 50. The information processing apparatus 100 is connected to the network 50 via a base station (not illustrated).

The central server 200 is a server that determines the safety of the information processing apparatus 100. The authentication authority server 300 is a server that issues an electronic certificate. The service terminal 400 is a server that provides a predetermined service to the information processing apparatus 100.

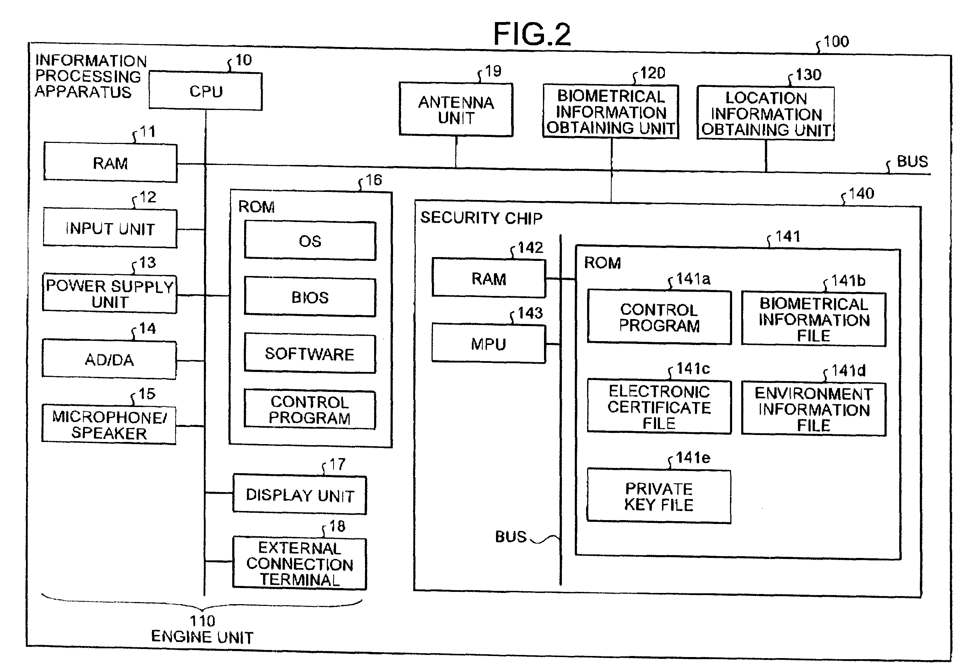

Given below is the description of a configuration of the information processing apparatus 100 illustrated in FIG. 1. FIG. 2 is a functional block diagram illustrating a configuration of the information processing apparatus 100. As illustrated in FIG. 2, the information processing apparatus 100 includes an engine unit 110, a biometrical information obtaining unit 120, a location information obtaining unit 130, and a security chip 140.

The engine unit 110 performs operations such as communication of telephone calls, characters, and image data. The engine unit 110 includes a CPU (Central Processing Unit) 10, a RAM (Random Access Memory) 11, an input unit 12, a power supply unit 13, an AD/DA 14, a microphone/speaker 15, a ROM 16, a display unit 17, an external connection terminal 18, and an antenna unit 19. The CPU 10 is connected to each of the abovementioned constituent elements 11 to 19 via a bus. Moreover, the CPU 10 controls the constituent elements 11 to 19 and implement a variety of software functionalities according to a control program stored in the ROM 16.

The external connection terminal 18 is, for example, a 16-pin interface that is used to connect a personal computer (not illustrated) or a peripheral device via a USB cable or the like. The RAM 11 is an SRAM (Static Random Access Memory) or a flash memory that is used as a memory unit to store data generated temporarily at the time of executing software programs.

The ROM 16 is, for example, an EEPROM (Electrically Erasable and Programmable ROM) and is used to store an OS (Operating System) that provides a basic operating environment of the information processing apparatus (mobile telephone) 100, a BIOS (Basic Input/Output System) that controls the peripheral device connected to the external connection terminal 18, and software such as Java (registered trademark) that is downloaded or installed in advance. Moreover, the ROM 16 also stores therein a control program that the information processing apparatus 100 uses to perform a variety of processing operations.

The biometrical information obtaining unit 120 scans a predetermined position on the user body to obtain biometrical information (information on fingerprint, iris, face, vein, voice, retina, etc.) of the user. The biometrical information obtaining unit 120 is disposed near the input unit 12 of the engine unit 110 and outputs the biometrical information obtained by scanning to the security chip 140.

The location information obtaining unit 130 uses a GPS (Global Positioning System) function to monitor location information (information on longitude/latitude, altitude, etc.) of the information processing apparatus 100 and outputs it to the security chip 140. More particularly, at the time of processing the biometrical information obtained by the biometrical information obtaining unit 120, the location information obtaining unit 130 obtains the location information of the information processing apparatus 100.

The security chip 140 is an LSI (Large Scale Integrated Circuit) chip that performs various user authentication operations independent of the CPU 10. The security chip 140 includes a ROM 141, a RAM 142, and an MPU (Micro Processing Unit) 143.

The ROM 141 is a memory unit for storing a variety of information used by the MPU 143. More particularly, the ROM 141 is used to store a control program 141a, a biometrical information file 141b, an electronic certificate file 141c, an environment information file 141d, and a private key file 141e.

The control program 141a is a program that the MPU 143 uses to implement a variety of software functionalities. The biometrical information file 141b is a file in which the biometrical information of the user is stored in advance.

The electronic certificate file 141c is a file in which the electronic certificate received from the authentication authority server 300 (see FIG. 1) is stored. The environment information file is a file in which information such as the name/version of the information processing apparatus 100, the name/version of the peripheral device, the name/version of each installed software program, and the location information of the information processing apparatus is stored.

The private key file 141e is a file in which a private key (secret key) issued by the authentication authority server 300 is stored. A public key that forms a counterpart to the private key is controlled by the authentication authority server 300. The private key stored in the private key file 141e is unique to the security chip 140. Thus, the authentication authority server 300 does not issue an identical private key to another apparatus.

The MPU 143 in the security chip 140 gathers the environment information of the information processing apparatus 100 and stores it in the environment information file 141d. More particularly, the MPU 143 obtains the name/version of the information processing apparatus 100 from the ROM 16 to gather detailed information on the information processing apparatus 100.

For example, if the information processing apparatus 100 is a mobile telephone, the MPU 143 obtains the name/version of the mobile telephone. If the information processing apparatus 100 is a microwave oven, the MPU 143 obtains the manufacturer name, the device name, and the model number of the microwave oven. Moreover, the MPU 143 refers to the BIOS of the ROM 16 to obtain information on the peripheral device connected to the external connection terminal 18 and stores that information as part of the environment information in the environment information file 141d.

For example, if a computer (not illustrated) is connected to the external connection terminal 18, the MPU 143 obtains the device name or the like of the computer and stores it in the environment information file 141d. Moreover, if the information processing apparatus 100 is a personal computer and a PC card is attached to a PC card slot functioning as the external connection terminal 18, then the MPU 143 obtains the device name of the attached PC card and stores it in the environment information file 141d.

The MPU 143 also obtains information about the software programs installed in the information processing apparatus 100 as part of the environment information. For that, the MPU 143 obtains information on the OS and the software programs stored in the ROM 16 and the name and version of each software program installed in the information processing apparatus 100.

For example, if the information processing apparatus 100 is a personal computer, then the MPU 143 obtains the OS name such as Windows (registered trademark) or Linux (registered trademark) and its version such as Second Edition as the environment information. Moreover, the MPU 143 obtains information about the installed software such as Internet Explorer (registered trademark) and its version such as SP2.

Also, the name of a software program written in, for example, Java (registered trademark) and downloaded via the network 50 is obtained. In this way, the MPU 143 constantly monitors the BIOS and the OS in the ROM 16 and, when a software program is newly installed or when a peripheral device is newly connected to the external connection terminal 18, gathers information as the environment information and stores it in the environment information file 141d.

Moreover, upon obtaining the location information from the location information obtaining unit 130, the MPU 143 stores it in the environment information file 141d.

The biometrical information file 141b is used for user authentication. For example, at the time of purchasing the information processing apparatus 100, biometrical information of the purchaser is obtained at the store and stored in the biometrical information file 141b inside the ROM 141 as initially registered information (biometrical information registered in the biometrical information file 141b is hereinafter referred to as authenticated biometrical information). The MPU 143 obtains biometrical information from the biometrical information obtaining unit 120 (biometrical information obtained from the biometrical information obtaining unit 120 is hereinafter referred to as obtained biometrical information) and compares the obtained biometrical information with the authenticated biometrical information to determine whether the obtained biometrical information is correct.

In the present embodiment, the biometrical information file 141b that includes biometrical information for user authentication is stored in the information processing apparatus 100. Alternatively, it is also possible to store the biometrical information file 141b in the central server 200 or the authentication authority server 300. In that case, the user authentication with the biometrical information can be performed in the central server 200 or the authentication authority server 300. For that, the biometrical information that is encrypted with the private key in the private key file 141e and the electronic certificate are sent to the central server 200 or the authentication authority server 300 for user authentication.

The electronic certificate file 141c is used to store the electronic certificate issued by the authentication authority server 300. In a similar manner, the private key file is used to store the private key issued for the information processing apparatus 100 by the authentication authority server 300. The public key issued for the information processing apparatus 100 is stored in the authentication authority server 300. The MPU 143 uses the private key to encrypt the communicated data of business transactions, the environment information, the biometrical information, and a message digest and sends the encrypted data and the electronic certificate to the central server 200 via the network 50.

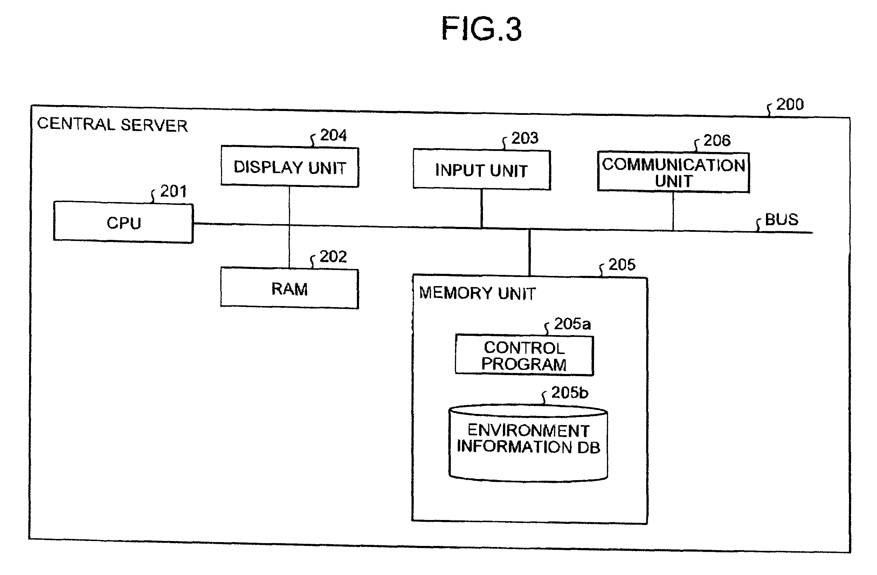

Given below is the description of a configuration of the central server 200 illustrated in FIG. 1. FIG. 3 is a functional block diagram of the central server 200 according to the present embodiment. As illustrated in FIG. 3, the central server 200 includes a CPU 201, a RAM 202, an input unit 203, a display unit 204, a memory unit 205, and a communication unit 206.

The CPU 201 is connected to a gateway via a bus for communicating information with the RAM 202, the memory unit 205 such as a hard disk drive, the information processing apparatus 100, the authentication authority server 300, and the service terminal 400. Moreover, the CPU 201 is connected to the communication unit 206 such as a LAN card, the display unit 204 such as a liquid crystal display, and the input unit 203 such as a keyboard or a mouse.

The CPU 201 is connected to the abovementioned constituent elements 202 to 206 of the central server 200 and implements a variety of software functionalities. The memory unit 205 stores therein a control program 205a that the central server 200 uses in implementing a variety of processing operations and an environment information DB (Data Base) 205b that includes permissible environment conditions according to safety ranks indicating the level of safety of the communicated information.

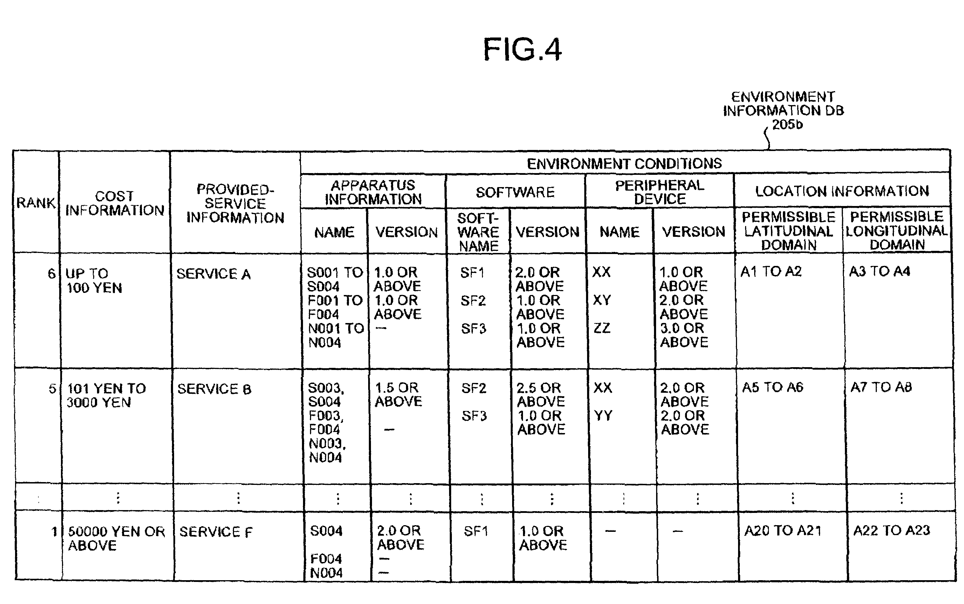

Given below is the description of a data structure of the environment information DB 205b. FIG. 4 is a diagram of an exemplary data structure of the environment information DB 205b. As illustrated in FIG. 4, a rank field has safety ranks from 1 to 6 according to the level of safety of the communicated information. The safety rank 1 indicates the highest level of safety, while the safety rank 6 indicates the lowest level of safety.

As illustrated with respect to a cost information field and a provided-service information field, the safety rank for a small amount transaction of about 100 yen or for a low-cost service is set to 6 because smoothness in transaction is given emphasis rather than the safety. On the other hand, for a transaction of an expensive item of 50,000 yen or more or for a high-cost service, the safety rank is set to 1 because it is necessary to ensure high level of safety.

In an apparatus information field of an environment-condition field, the name/version of each information processing apparatus 100 of a client is stored in correspondence to its safety rank. For example, the information processing apparatus 100 corresponding to the safety rank 1 requires having a name of S004, F004, or N004. Unless that condition is satisfied as environment information, the information processing apparatus 100 is not determined as valid in environment authentication. Particularly, for the name S004, the information processing apparatus 100 requires having a version of 2.0 or above. In comparison, for the safety rank 6, the information processing apparatus 100 having a name from among S001 to S004, F001 to F004, and N001 to N004 is determined as valid.

In a similar manner, a peripheral device field includes information on the name and version of peripheral devices corresponding to each safety rank. That information is used in environment authentication. For example, for the safety rank 6, the information processing apparatus 100 is determined as valid in environment authentication even if a peripheral device such as XX or XY is connected thereto.

On the other hand, no condition regarding peripheral devices is specified for the safety rank 1. Thus, if information about a peripheral device is sent as the environment information from the information processing apparatus 100, it is not determined as valid. That is, for the safety rank 1, connection of any peripheral device is determined as invalid in environment authentication. Meanwhile, the stored information is assumed to be provided by the vendors.

Similarly, a software field includes the name and version of software corresponding to each safety rank. For the safety rank 6, the information processing apparatus 100 installed with software SF1 of version 2.0 or above is determined as valid.

In comparison, for the safety rank 1, the information processing apparatus 100 installed with software SF1 of version 1.0 or above is determined as valid. The reason for setting safety ranks in determining safety is to strike a balance between smooth service provision and safety. For example, if the information processing apparatus 100 is a personal computer, the browser installed therein differs from user to user. For example, Internet Explorer (registered trademark) developed by Microsoft Corporation (registered trademark) is available in a plurality of versions and higher versions thereof have fewer security holes.

To meet the requirement of a high level of safety, it is possible to determine the browser as valid based on the obtained environment information only if it is of the latest version having no security holes and subsequent service provision can be approved. However, in that case, the users that have not installed the latest version of the browser are not in a position to receive any service, which is not reasonable. For a low-cost service that does not require a substantially high level of safety, the safety rank for authentication is lowered and, even if the latest version is not installed, the browser is determined as valid under certain conditions to enable service provision.

A location information field includes, for each safety rank, information of a permissible latitudinal domain and a permissible longitudinal domain of the information processing apparatus 100 in which service provision is approved. For example, for the safety rank 6, the information processing apparatus 100 located in the domain of latitudes A1 and A2 and longitudes A3 and A4 is determined as valid in environment authentication.

For the safety rank 1, the information processing apparatus 100 located in the domain of latitudes A20 and A21 and longitudes A22 and A23 is determined as valid in environment authentication. Although the location information for each safety rank can be set based on arbitrary criteria, it is possible to restrict the permissible latitudinal domain and the permissible longitudinal domain in ascending order of the safety rank 6 to the safety rank 1 (larger the digit of a safety rank, wider is the permissible latitudinal domain and the permissible longitudinal domain). That is, the service-providable location of the information processing apparatus 100 can be restricted in proportion to the degree of importance (or cost) of a service.

Meanwhile, although not illustrated, it is also possible to include information on high-crime areas as location information in the environment conditions. Thus, the information processing apparatus 100 can be configured to be determined as invalid if the location information obtained at the time of environment authentication includes the location of a high-crime area.

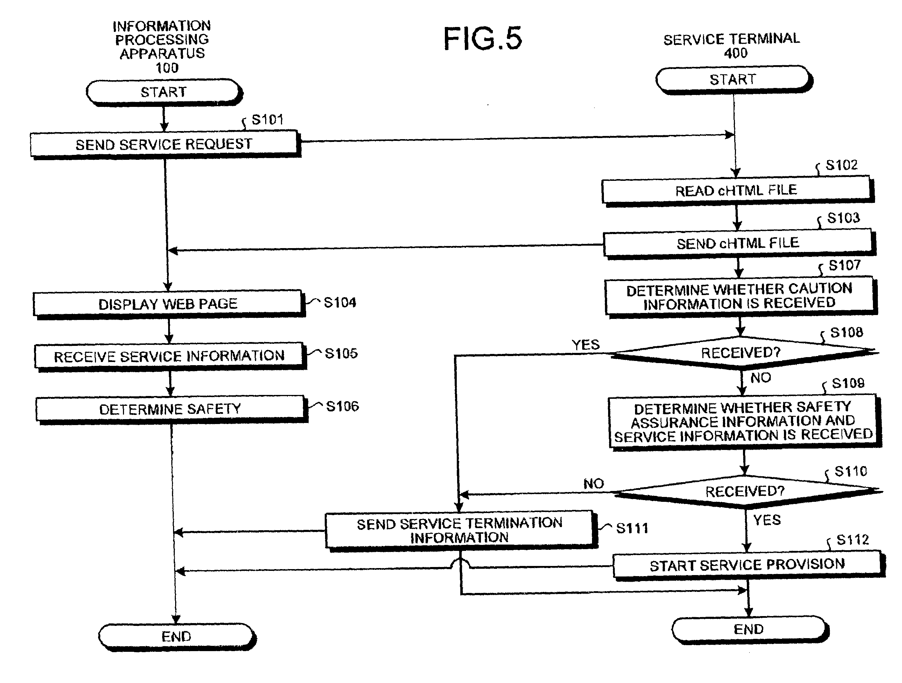

Given below is the description of a sequence of operations in the safety determining system by using a flowchart. FIG. 5 is a flowchart illustrating a sequence of operations in service provision performed between the information processing apparatus 100 and the service terminal 400. With reference to FIG. 5, a URL (Uniform Resource Locator) of a web server operating in the service terminal 400 is input from the input unit 12 of the information processing apparatus 100 and a service request is send to the web server (Step S101).

The web server, which is, for example, a HTTP (Hypertext Transfer Protocol) server reads a corresponding cHTML (compact Hypertext Markup Language) file from a memory unit (not illustrated) (Step S102) and sends it to the information processing apparatus 100 (Step S103).

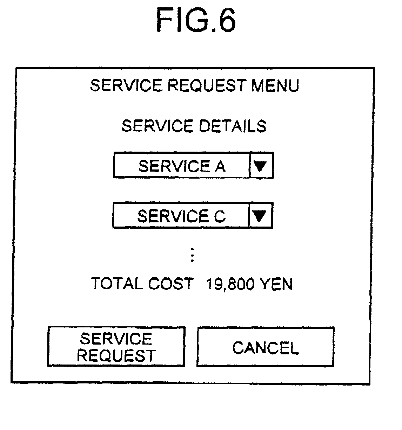

The CPU 10 in the information processing apparatus 100 parses the cHTML file by using a browser software stored in the ROM 16 and displays a web page for service provision as illustrated in FIG. 6 (Step S104). FIG. 6 is a diagram of a web page image. As illustrated in FIG. 6, service details and service cost are displayed on the display unit 17. The user operates the input unit 12 to select target services. When services are selected, the CPU 10 executes a Java (registered trademark) script received along with the cHTML file to calculate and display the total cost. Apart from that, it is also possible to prompt the user to enter address, telephone number, name, ID, or password.

Thus, the CPU 10 receives service information of the target services from the input unit 12 (Step S105). When a service request button illustrated in FIG. 6 is selected, the CPU 10 shifts to a safety determining processing operation (Step S106). The processing from Step S107 to Step S112 is described later. Given below is the description of the safety determining processing.

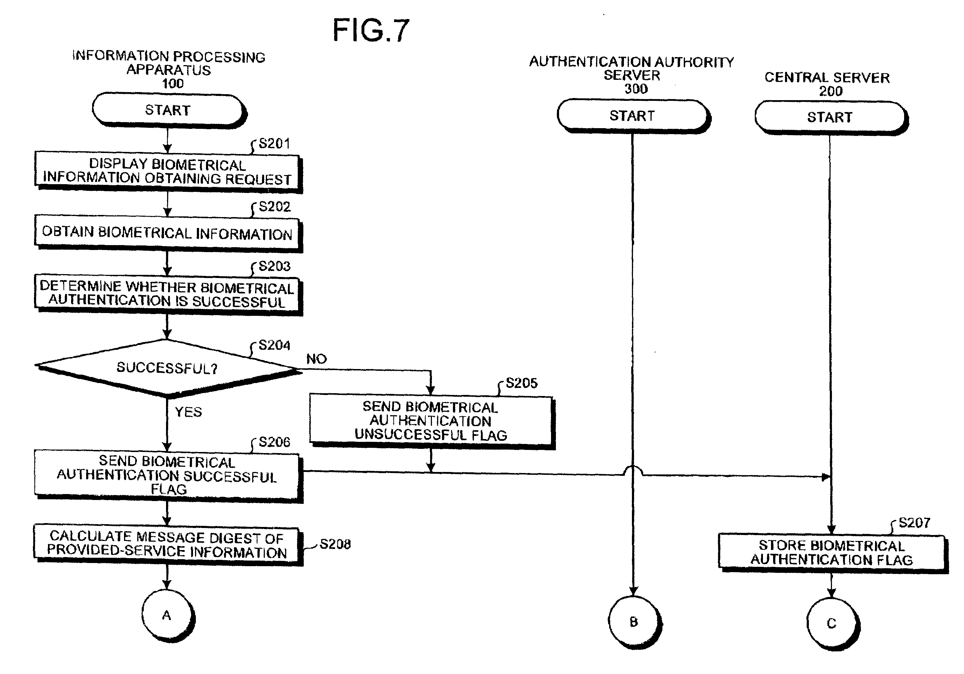

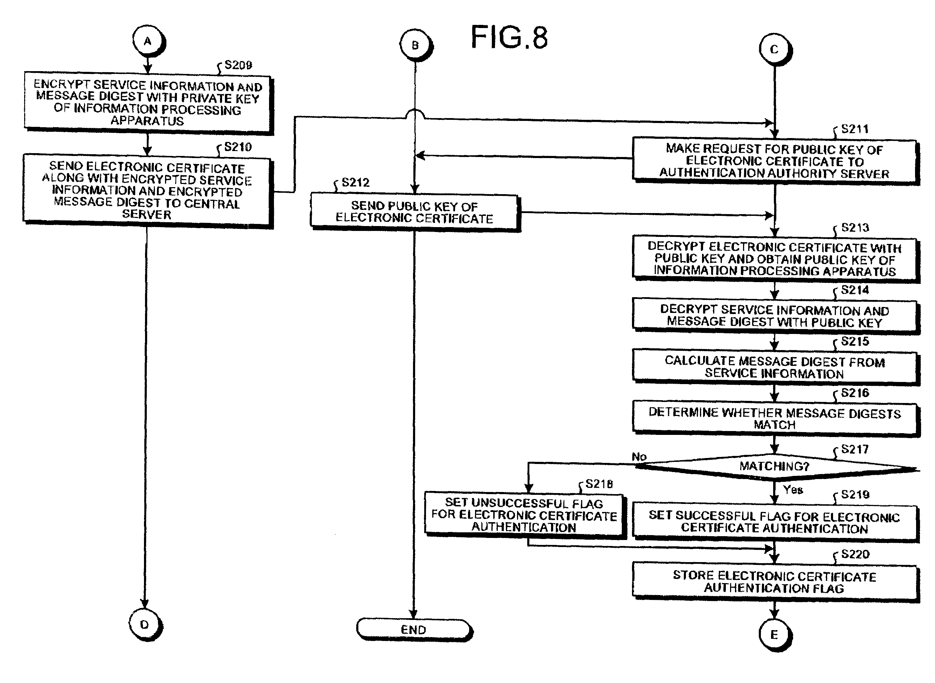

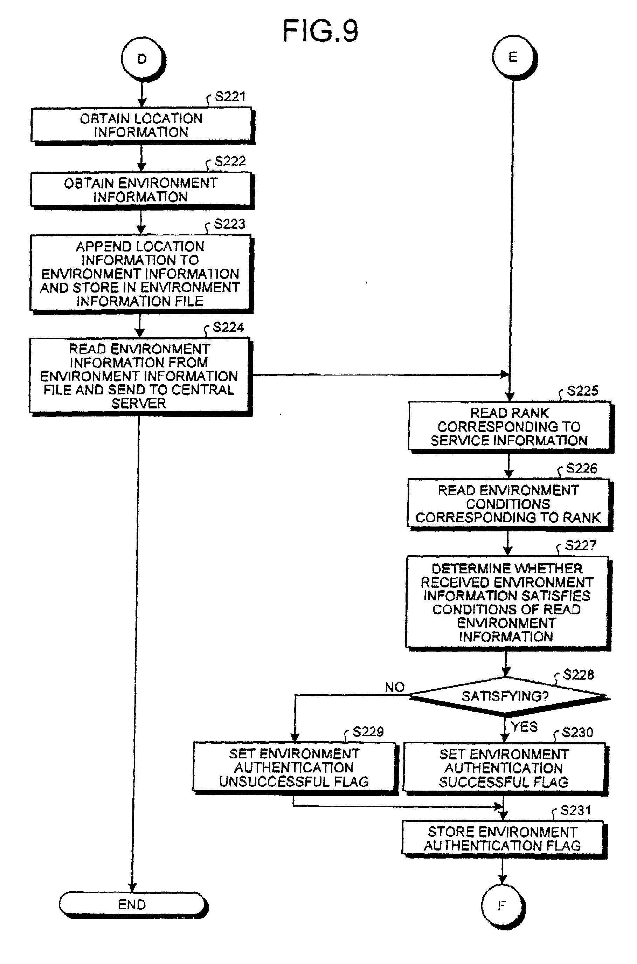

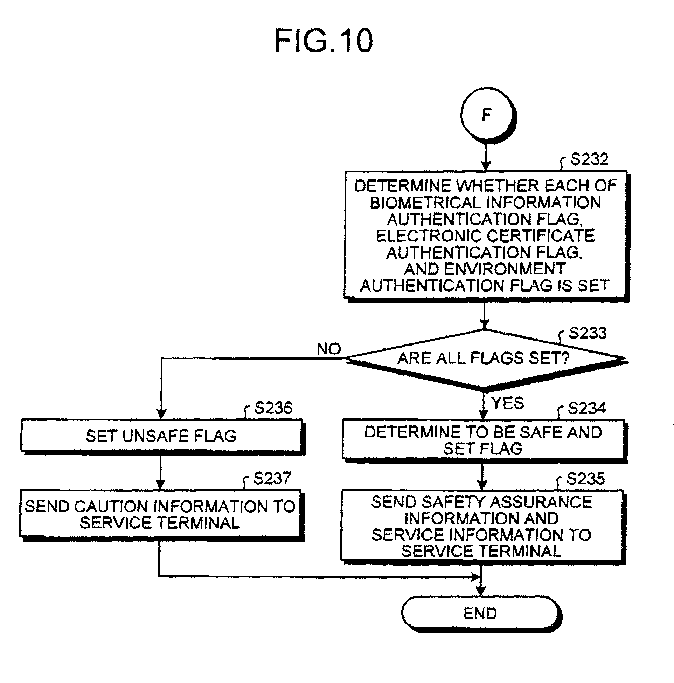

FIGS. 7 to 10 are flowcharts illustrating a sequence of operations in the safety determining processing. When the service information is input in the CPU 10, the MPU 143 in the security chip 140 executes the control program 141a and displays a biometrical information obtaining request on the display unit 17 (Step S201). The matter to be displayed is stored in advance in the ROM 141. The matter such as "please place your thumb on the biometrical information obtaining unit" can be read from the ROM 141 and displayed on the display unit 17.

When the biometrical information is input from the biometrical information obtaining unit 120, the MPU 143 in the security chip 140 obtains the biometrical information (obtained biometrical information) (Step S202) and temporarily stores it in the RAM 142. Then, the MPU 143 reads the authenticated biometrical information from the biometrical information file 141b stored in the ROM 141 and determines whether the obtained biometrical information matches with the authenticated biometrical information, that is, whether biometrical authentication is successful (Step S203).

If the obtained biometrical information does not match with the authenticated biometrical information and if the biometrical authentication is deemed unsuccessful (No at Step S204), the MPU 143 sets a biometrical authentication unsuccessful flag and sends it to the central server 200 (Step S205). On the other hand, if the obtained biometrical information matches with the authenticated biometrical information and if the biometrical authentication is deemed successful (Yes at Step S204), the MPU 143 sets a biometrical authentication successful flag and sends it to the central server 200 (Step S206).

The CPU 201 in the central server 200 stores the received biometrical authentication flag (biometrical authentication successful flag or biometrical authentication unsuccessful flag) in the memory unit 205 (Step S207). Meanwhile, although the biometrical authentication using the biometrical information according to the present embodiment is performed in the information processing apparatus 100, it is also possible to store the biometrical information obtained in advance (authenticated biometrical information) in the authentication authority server 300 or the central server 200 and biometrical authentication can be performed therein. The abovementioned operation marks the end of the biometrical authentication using the biometrical information.

Subsequently, authentication is performed using the electronic certificate. The MPU 143 in the security chip 140 obtains a message digest by using a hash function stored in the ROM 141 on the service information input at Step S105 (see FIG. 5) (Step S208). The MPU 143 then reads the private key of the information processing apparatus 100 issued in advance by the authentication authority server 300 from the private key file 141e and uses the private key to encrypt the service information and the message digest (Step S209).

Subsequently, the MPU 143 reads the electronic certificate issued in advance by the authentication authority server 300 from the electronic certificate file 141c and sends the electronic certificate along with the encrypted service information and message digest to the central server 200 (Step S210). The CPU 201 in the central server 200 stores the electronic certificate, the encrypted service information, and the encrypted message digest in the RAM 202.

Then, the CPU 201 in the central server 200 accesses the authentication authority server 300 specified in the electronic certificate and makes a request for the public key of the electronic certificate (public key of authentication authority) (Step S211). The authentication authority server 300 sends the public key of the electronic certificate to the central server 200 (Step S212).

The CPU 201 in the central server 200 then reads the electronic certificate from the RAM 202, uses the public key of authentication authority received from the authentication authority server 300 to decrypt the electronic certificate, and obtains the public key of the information processing apparatus 100 (Step S213).

Subsequently, the CPU 201 in the central server 200 uses the public key of the information processing apparatus 100 to decrypt the encrypted service information and message digest (Step S214). Moreover, the CPU 201 obtains a message digest by using a hash function stored in the memory unit 205 on the decrypted service information (Step S215).

The CPU 201 in the central server 200 then determines whether the message digest decrypted at Step S214 matches with the message digest calculated at Step S215, that is, whether there is any alternation in the service information during transmission or whether the information is transmitted from the information processing apparatus of an authorized user (Step S216).

If the two message digests do not match (No at Step S217), the CPU 201 determines that there has been some kind of alternation or impersonation and sets an unsuccessful flag for electronic certificate authentication (Step S218). On the other hand, if the two message digests match (Yes at Step S217), the CPU 201 determines that there is no alternation or impersonation and sets a successful flag for electronic certificate authentication (Step S219). The CPU 201 in the central server 200 then stores the electronic certificate authentication flag (successful flag or unsuccessful flag for electronic certificate authentication) in the memory unit 205 (Step S220). That marks an end of the authentication using the electronic certificate.

Given below is the description about environment authentication. The location information obtaining unit 130 in the information processing apparatus 100 obtains the location information thereof by using the GPS function (Step S221). The MPU 143 in the security chip obtains the environment information of the information processing apparatus 100 (Step S222). The MPU 143 then appends the location information output by the location information obtaining unit 130 to the environment information and stores the appended environment information in the environment information file 141d (Step S223).

The MPU 143 reads the environment information from the environment information file 141d and sends it to the central server 200 (Step S224). The CPU 201 in the central server 200 stores the environment information in the RAM 202. Then, the CPU 201 refers to the environment information DB 205b and reads the safety rank corresponding to the service information decrypted at Step S214 (Step S225). That is, the CPU 201 refers to the cost information field or the provided-service information field and, based on the transacted cost or the provided-service information in the service information, reads the corresponding safety rank from the rank field. For example, if the cost of the provided service exceeds 50,000 yen, then the safety rank 1 is selected.

Subsequently, the CPU 201 reads from the environment information DB 205b the permissible environment conditions corresponding to the read safety rank (Step S226). That is, based on the read safety rank, the CPU 201 reads from the environment conditions field the name/version of the information processing apparatus, the name/version of the software, the name/version of the peripheral device, and the location information (permissible latitudinal domain and permissible longitudinal domain). The CPU 201 then determines whether the environment information stored in the RAM 202 satisfies the conditions of the environment information read from the environment-condition field (Step S227).

If the conditions are not satisfied (No at Step S228), the CPU 201 sets an environment authentication unsuccessful flag (Step S229). On the other hand, if the conditions are satisfied (Yes at Step S228), the CPU 201 sets an environment authentication successful flag (Step S230). Then, the CPU 201 in the central server 200 stores the environment authentication flag (environment authentication successful flag or environment authentication unsuccessful flag) in the memory unit 205 (Step S231).

The CPU 201 then reads the biometrical authentication flag, the electronic certificate authentication flag, and the environment authentication flag from the memory unit 205 and determines whether the biometrical authentication successful flag, the successful flag for electronic certificate authentication, and the environment authentication successful flag are set under an AND condition (Step S232). If all the valid flags are set (Yes at Step S233), then the CPU 201 determines the information processing apparatus 100 to be safe and sets a safe flag (Step S234). In other words, the information processing apparatus 100 is determined to be safe only when authentication is successful in each of the biometrical authentication, the electronic certificate authentication (PKI authentication), and the environment authentication (authentication including location information). The CPU 201 in the central server 200 then sends safety assurance information indicating that the information processing apparatus 100 is safe and the service information to the service terminal 400 (Step S235).

On the other hand, if any one of the biometrical authentication, the electronic certificate authentication (PKI authentication), and the environment authentication has an unsuccessful flag (No at Step S233), the CPU 201 considers the information processing apparatus 100 to be unsafe and sets an unsafe flag (Step S236). In that case, the CPU 201 in the central server 200 sends caution information indicating that the information processing apparatus 100 is unsafe to the service terminal 400 (Step S237).

Reverting to the description with reference to FIG. 5, the web sever operating in the service terminal 400 determines whether the caution information is received with respect to the information processing apparatus 100 from the central server 200 (Step S107). If the caution information is not received (No at Step S108), the web server determines whether the safety assurance information and the service information is received from the central server 200 (Step S109).

On the other hand, if the caution information is received (Yes at Step S108) or if the safety assurance information and the service information is not received (No at Step S110), the web server concludes that the information processing apparatus 100 is likely unauthorized and sends service termination information to the information processing apparatus 100 (Step S111).

If the safety assurance information and the service information is received (Yes at Step S110), the web server concludes that the safety of the information processing apparatus 100 is assured, duly accepts its service request, and starts providing the service thereto (Step S112).

In this way, biometrical authentication, PKI authentication, and environment authentication including location information is performed to ensure sufficient safety before starting service provision. Moreover, the level of authentication is modified depending on the service cost to enable smooth business transactions.

As described above, in the safety determining system according to the present embodiment, the information processing apparatus 100 performs authentication of biometrical information and gathers corresponding environment information (apparatus information, software, peripheral devices, location information). Then, the information processing apparatus 100 sends the gathered environment information and service information of a target service to the central server 200. Based on the environment information, the service information, and the information stored in the environment information DB 205b, the central server 200 determines whether it is safe to provide a service to the information processing apparatus 100. Based on that determination result, the service terminal 400 provides a service to the information processing apparatus 100. Thus, even if the biometrical information leaks by any chance, unauthorized use thereof can be prevented because a service is receivable only when the information processing apparatus 100 is operated from a predetermined location.

In the present embodiment, the location information obtaining unit 130 is disposed outside the security chip 140 as illustrated in FIG. 2. Alternatively, it is also possible to dispose the location information obtaining unit 130 inside the security chip 140.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

Moreover, of the processes described in the present embodiment, all or part of the processes explained as being performed automatically can be performed manually. Similarly, all or part of the processes explained as being performed manually can be performed automatically by a known method.

Furthermore, the processing procedures, the control procedures, specific names, various data, and information including parameters described in the present embodiment or illustrated in the drawings can be changed as required unless otherwise specified.

Moreover, the constituent elements of the device illustrated in the drawings are merely conceptual, and need not be physically configured as illustrated. The constituent elements, as a whole or in part, can be separated or integrated either functionally or physically based on various types of loads or use conditions.

### INDUSTRIAL APPLICABILITY

In this way, the present invention is suitable in a service providing system that provides services to a user terminal via a network and particularly suitable when it is necessary to enhance the safety in service provision.

## Claims

1. A service control system comprising:
an authentication terminal that performs authentication of a user terminal used by a service user; and
a service terminal that provides a service to the user terminal,
the user terminal including a chip that independently executes a predetermined processing operation, the chip including
a private key storing unit that stores therein biometrical information of the service user and a private key that is a key unique to the chip;
an environment information obtaining unit that, when the biometrical information is processed, obtains information on a location of the user terminal as environment information at a time when the biometrical information is processed; and
an encrypting unit that encrypts service information of a service requested by the service user and the environment information with the private key to obtain encrypted information and sends the encrypted information to the authentication apparatus,
the authentication terminal including
a decrypting unit that decrypts the encrypted information with a public key that forms a counterpart to the private key to generate decrypted information; and
an authentication processing unit that, based on the decrypted information, performs authentication of the user terminal and outputs an authentication result to the service terminal,
the service terminal including a service providing unit that, based on the authentication result output by the authentication processing unit, performs service provision with respect to the user terminal.

2. The service control system according to claim 1, wherein
the authentication terminal includes a domain information storing unit that stores therein permissible domain information that is information, maintained in a corresponding manner, on a service provided to the user terminal by the service terminal and a domain of the user terminal in which provision of the service is permissible, and
the authentication processing unit performs authentication of the user terminal based on the service information and the environment information which are included in the decrypted information and the permissible domain information.

3. The service control system according to claim 2, wherein
the environment information obtaining unit obtains information on a peripheral device connected to the user terminal and information on software installed in the user terminal as environment information, and
the domain information storing unit stores therein permissible domain information that is information, maintained in a corresponding manner, on a service provided to the user terminal and a peripheral device and software for which provision of the service is permissible.

4. A service control method for a service control system that includes an authentication terminal that performs authentication of a user terminal used by a service user; and a service terminal that provides a service to the user terminal, the user terminal including a chip that independently executes a predetermined processing operation, the service control method comprising:
in the chip,
a private key storing step of storing, in a storing unit, biometrical information of the service user and a private key that is a key unique to the chip;
an environment information obtaining step of, when the biometrical information is processed, obtaining information on a location of the user terminal as environment information at a time when the biometrical information is processed;
an encrypting step of encrypting service information of a service requested by the service user and the environment information with the private key to obtain encrypted information and sending the encrypted information to the authentication apparatus;
in the authentication terminal,
a decrypting step of decrypting the encrypted information with a public key that forms a counterpart to the private key to generate decrypted information;
an authentication processing step of, based on the decrypted information, performing authentication of the user terminal and outputs an authentication result to the service terminal; and
in the service terminal,
a service providing step of, based on the authentication result output by the authentication processing unit, performing service provision with respect to the user terminal.

5. The service control method according to claim 4, further comprising
in the authentication terminal, a domain information storing step of storing, in a storing unit, permissible domain information that is information, maintained in a corresponding manner, on a service provided to the user terminal by the service terminal and a domain of the user terminal in which provision of the service is permissible, wherein
the authentication processing step includes performing authentication of the user terminal based on the service information and the environment information which are included in the decrypted information and the permissible domain information.

6. The service control method according to claim 5, wherein
the environment information obtaining step includes obtaining information on a peripheral device connected to the user terminal and information on software installed in the user terminal as environment information, and
the domain information storing step includes storing, in the storing unit, permissible domain information that is information, maintained in a corresponding manner, on a service provided to the user terminal and a peripheral device and software for which provision of the service is permissible.

7. A service control program for a service control system that includes an authentication terminal that performs authentication of a user terminal used by a service user; and a service terminal that provides a service to the user terminal, the user terminal including a chip that independently executes a predetermined processing operation, the service control program causing a computer to perform:
in the chip,
a private key storing step of storing, in a storing unit, biometrical information of the service user and a private key that is a key unique to the chip;
an environment information obtaining step of, when the biometrical information is processed, obtaining information on a location of the user terminal as environment information at a time when the biometrical information is processed;
an encrypting step of encrypting service information of a service requested by the service user and the environment information with the private key to obtain encrypted information and sending the encrypted information to the authentication apparatus;
in the authentication terminal,
a decrypting step of decrypting the encrypted information with a public key that forms a counterpart to the private key to generate decrypted information;
an authentication processing step of, based on the decrypted information, performing authentication of the user terminal and outputs an authentication result to the service terminal; and
in the service terminal,
a service providing step of, based on the authentication result output by the authentication processing unit, performing service provision with respect to the user terminal.

8. The service control program according to claim 7, further causing the computer to perform
in the authentication terminal, a domain information storing step of storing, in a storing unit, permissible domain information that is information, maintained in a corresponding manner, on a service provided to the user terminal by the service terminal and a domain of the user terminal in which provision of the service is permissible, wherein
the authentication processing step includes performing authentication of the user terminal based on the service information and the environment information which are included in the decrypted information and the permissible domain information.

9. The service control program according to claim 8, wherein
the environment information obtaining step includes obtaining information on a peripheral device connected to the user terminal and information on software installed in the user terminal as environment information, and
the domain information storing step includes storing, in the storing unit, permissible domain information that is information, maintained in a corresponding manner, on a service provided to the user terminal and a peripheral device and software for which provision of the service is permissible.
